# EUROPÄISCHE PATENTSCHRIFT

(11) **EP 3 527 426 B1**
(45) Veröffentlichungstag und Bekanntmachung des Hinweises auf die Patenterteilung: **30.09.2020**
(21) Anmeldenummer: 18208533.2
(22) Anmeldetag: 27.11.2018
(51) Int. Cl.: B60Q 1/30, B60Q 1/52, B60Q 1/26, B60Q 1/50, F21S 43/14, F21S 43/19, F21S 43/239, F21S 43/245, F21S 43/20, F21W 103/30, F21W 103/35

(54) **ANZEIGEVORRICHTUNG FÜR EIN KRAFTFAHRZEUG SOWIE KRAFTFAHRZEUG MIT EINER ANZEIGEVORRICHTUNG**
DISPLAY DEVICE FOR A MOTOR VEHICLE AND MOTOR VEHICLE WITH SAME
DISPOSITIF D'AFFICHAGE POUR UN VÉHICULE AUTOMOBILE AINSI QUE VÉHICULE AUTOMOBILE DOTÉ D'UN DISPOSITIF D'AFFICHAGE

(30) Priorität: 16.02.2018 DE 102018202384
(43) Veröffentlichungstag der Anmeldung: 21.08.2019
(73) Patentinhaber: AUDI AG, 85045 Ingolstadt (DE)
(72) Erfinder: Lendle, Reiner, 74855 Haßmersheim (DE); Muntada Roura, Cesar, 85276 Pfaffenhofen an der Ilm (DE); Horn, Michael, 85049 Ingolstadt (DE)

(56) Entgegenhaltungen:
- DE-U1- 8 902 121
- GB-A- 2 507 279
- JP-A- 2015 169 431
- US-A1- 2015 077 272

## Beschreibung

Die Erfindung betrifft eine Anzeigevorrichtung für ein Kraftfahrzeug sowie ein Kraftfahrzeug mit einer derartigen Anzeigevorrichtung.

Lichtfunktionen an Kraftfahrzeugen werden in der Regel so ausgeführt, dass aus Signalrichtung eine Lichtscheibe sichtbar ist, hinter der mit oder ohne weitere optisch wirksame Elemente Lichtquellen angeordnet sind. Somit ist die Lage der Lichtfunktion auch im ausgeschalteten Zustand der Leuchte sichtbar. Hierdurch ergeben sich jedoch Einschränkungen bezüglich der Lichtfunktion am Kraftfahrzeug, denn ein beispielsweise in einer Warnsituation zu beleuchtendes Symbol am Kraftfahrzeug wäre auch im ausgeschalteten Zustand der entsprechenden Leuchte stets zu sehen.

Im Stand der Technik werden verschiedene Lichtfunktionen beschrieben, bei denen die jeweilige Lichtquelle außerhalb des Sichtfelds eines Betrachters oder Benutzers eines Kraftfahrzeugs positioniert ist.

In der DE 689 20 985 T2 wird ein holografisches Automobil-Stopplicht-System für ein Kraftfahrzeug beschrieben. Hierbei wird ein holografisches Bild erzeugt, indem ein Hologramm, das benachbart zu einer Automobilheckscheibe angebracht ist, durch eine außerhalb des Sichtfelds des Fahrers des Kraftfahrzeugs positionierte Beleuchtung beleuchtet wird. Dieses holografische Bild ist für einen Betrachter, der sich hinter dem Kraftfahrzeug befindet, sichtbar.

In der DE 41 02 571 C2 wird ebenfalls eine Anordnung für ein Kraftfahrzeug beschrieben, bei der durch eine Beleuchtung der Heckscheibe des Kraftfahrzeugs, auf der ein Transmissionshologramm angeordnet ist, das in Flächenbereiche mit jeweils einzelnen Hologrammen aufgeteilt ist, das Transmissionshologramm für einen Betrachter des Kraftfahrzeugs sichtbar gemacht wird.

In der DE 89 02 121 U1 wird ebenfalls eine Vorrichtung beschrieben, mit der Informationen auf eine an der Innenseite der Heckscheibe eines Kraftfahrzeugs angebrachte Projektionsfläche projiziert werden können. Dies erfolgt durch eine entsprechende Beleuchtung und Aktivierung dieser Projektionsfläche vom Inneren des Kraftfahrzeugs aus, woraufhin die projizierten Informationen für einen Betrachter des Kraftfahrzeugs sichtbar gemacht werden. In nicht-aktiviertem Zustand ist die Heckscheibe jedoch normal lichtdurchlässig und durchsichtig.

In der DE 201 15 792 U1 wird ein Bremslichtsystem für ein Kraftfahrzeug beschrieben, bei dem Lichtstrahlen einer Lichtquelle auf die hintere Fahrzeugscheibe vom Fahrzeuginneren aus projiziert werden. Diese Fahrzeugscheibe weist Lichtbrecher oder Lichtreflektoren auf, die dazu dienen, die auf die Fahrzeugscheibe projizierten Lichtstrahlen wie eine Leinwand nach außen, das heißt in die Umgebung des Kraftfahrzeugs, zu leiten. Dieses System dient als zusätzliche Bremsbeleuchtung an einer hinteren Fahrzeugscheibe eines Kraftfahrzeugs.

In der DE 10 2011 012 520 A1 wird ebenfalls eine Bremsleuchte für ein Kraftfahrzeug beschrieben. Die Lichtquelle dieser Bremsleuchte ist für einen Betrachter des Kraftfahrzeugs jedoch verdeckt angeordnet. Mit der Lichtquelle wird ein holografisch-optisches Bauelement, das an der Innenseite einer Fahrzeugscheibe angebracht ist, beleuchtet. Ein Betrachter des Kraftfahrzeugs sieht letztendlich das an dem holografisch-optischen Bauelement gebrochene beziehungsweise gespiegelte Licht der Lichtquelle.

In der US 9,604,568 B1 wird eine Leuchtvorrichtung für ein Kraftfahrzeug beschrieben, die dazu ausgelegt ist, mit dem Licht einer Projektorlichtquelle beispielsweise ein Bildmuster neben ein Nummernschild eines Kraftfahrzeugs zu projizieren und mit einer zusätzlichen Lichtquelle das Nummernschild zu beleuchten.

In der JP,04-154448,A wird eine Leuchtvorrichtung für ein Kraftfahrzeug beschrieben, bei der mithilfe einer in einem Kraftfahrzeuginneren in einem Heckbereich angeordneten Lichtquelle, deren Licht an spiegelbeschichteten Lamellen an einer Oberfläche einer Heckscheibe des Kraftfahrzeugs reflektiert wird, die Heckscheibe beleuchtet wird.

Für die genannten optischen Systeme sind jedoch stets entsprechende optische Elemente an einer Fahrzeugscheibe des Kraftfahrzeugs vorgesehen, beispielsweise holografische Folien, Lichtbrecher oder andere Lichtreflektoren.

Es ist daher die Aufgabe der Erfindung, eine Lösung bereitzustellen, mittels welcher eine Anzeige auf einer Fahrzeugscheibe mit relativ einfachen technischen Mitteln und ohne Beeinflussung der Fahrzeugscheibe realisiert werden kann.

Diese Aufgabe wird durch eine Anzeigevorrichtung für ein Kraftfahrzeug gelöst.

Die erfindungsgemäße Anzeigevorrichtung für ein Kraftfahrzeug umfasst ein Fahrzeuganbauteil, in welchem eine Anzeigeeinrichtung angeordnet ist. Die Anzeigevorrichtung weist eine hinterleuchtbare Anzeigefläche zum Projizieren eines Abbilds auf eine Außenseite einer Fahrzeugscheibe des Kraftfahrzeugs auf. Das Fahrzeuganbauteil verdeckt in seiner bestimmungsgemäßen Anbaulage die Anzeigefläche zumindest aus einer vorgegebenen Betrachtungsposition, welche außerhalb des Kraftfahrzeugs ist. In der bestimmungsgemäßen Anbaulage durch die Anzeigefläche hindurchtretendes Licht trifft derart auf die Außenseite der Fahrzeugscheibe und wird von dieser derart reflektiert, dass das Abbild aus der vorgegebenen Betrachtungsposition sichtbar ist.

Die erfindungsgemäße Vorrichtung für ein Kraftfahrzeug ist somit als eine von außen an der Karosserie des Kraftfahrzeugs angeordnete Fahrzeugkomponente ausgebildet, die eine Einheit zum Anzeigen einer Anzeige, wie einem Symbol oder Schriftzug, aufweist. Diese Anzeigeeinrichtung der Anzeigevorrichtung umfasst wiederum eine Anzeigeoberfläche, die sogenannte Anzeigefläche, die von hinten angeleuchtet werden kann. Bei entsprechender Anleuchtung der Anzeigefläche wird die Anzeige, das heißt ein durch die Ausbildung der Anzeigefläche vorgegebenes Abbild, auf einer äußeren Fensterfläche des Kraftfahrzeugs dargestellt. Das Fahrzeuganbauteil mit der Anzeigeeinrichtung ist dabei derart am Kraftfahrzeug befestigt, dass die Anzeigefläche selbst aus einer bestimmten Blickrichtung, beispielsweise von einem hinter dem Kraftfahrzeug fahrenden anderen Fahrzeug aus, nicht einsehbar ist. Das Fahrzeuganbauteil ist außerdem derart am Kraftfahrzeug befestigt, dass die äußere Seite der Fensterfläche des Kraftfahrzeugs von dem durch die Anzeigefläche hindurch strahlenden Lichtstrahl derart angestrahlt wird, dass der von der Fahrzeugscheibe zurückgebeugte Lichtstrahl aus der bestimmten Blickrichtung zu sehen ist und somit das Abbild für einen Betrachter des Kraftfahrzeugs zu sehen ist.

Die erfindungsgemäß vorgeschlagene Anzeigevorrichtung kann zum Beispiel an einem Dachspoiler oberhalb der Heckscheibe eines Kraftfahrzeugs positioniert sein. Die Anzeigeeinrichtung dieser Anzeigevorrichtung kann beispielsweise dazu ausgelegt sein, ein Warndreieck auf die Außenseite der Heckscheibe zu projizieren. Dieses auf die Heckscheibe projizierte Warndreieck kann beispielsweise von Personen in hinter dem Kraftfahrzeug fahrenden anderen Fahrzeugen oder von Personen, die sich in der Umgebung des Kraftfahrzeugs aufhalten und auf die Heckscheibe blicken, gesehen werden. Dies ist möglich, da das reflektierte Licht aufgrund einer entsprechenden Anordnung des Dachspoilers relativ zur Heckscheibe in Richtung der Betrachtungspositionen dieser Personen strahlt. Das derart auf die Heckscheibe projizierte Warndreieck kann beispielsweise immer dann angezeigt werden, wenn ein Benutzer des Kraftfahrzeugs den Warnblinker betätigt.

Ein Betrachter des Kraftfahrzeugs sieht hierbei nur das auf der Heckscheibe angezeigte Warndreieck, jedoch nicht die Anzeigeeinrichtung selbst, die das Abbild auf die Heckscheibe projiziert, da diese für den Betrachter des Kraftfahrzeugs verdeckt in den Dachspoiler, das heißt in die Anzeigevorrichtung, integriert ist. Mit dieser Anzeigevorrichtung ist es somit mit relativ einfachen Mitteln möglich eine zusätzliche und für einen Betrachter des Kraftfahrzeugs verdeckte Anzeigemöglichkeit zum Warnen und Informieren von zum Beispiel Personen in einem hinter dem Kraftfahrzeug fahrenden anderen Fahrzeug oder sich in der Umgebung hinter dem Kraftfahrzeug aufhaltenden Personen zu realisieren.

Erfindungsgemäß ist es allerdings vorgesehen, dass durch die Ausbildung und Wahl der Anzeigefläche das abzubildende Abbild vorgegeben ist. Im Gegensatz beispielsweise zur DE 10 2011 012 520 A1 ist somit kein holografisch-optisches Bauelement auf der Fahrzeugscheibe notwendig, um das gewünschte Abbild auf der Fahrzeugscheibe darzustellen. Denn erfindungsgemäß wird das Abbild bereits innerhalb der Anzeigevorrichtung generiert und lediglich an der Fahrzeugscheibe derart reflektiert, dass es aus der vorgegebenen Betrachtungsposition sichtbar ist.

Erfindungsgemäß ist es zudem vorgesehen, dass die Anzeigevorrichtung zumindest eine Lichtquelle umfasst, mit der die Anzeigefläche hinterleuchtbar ist. Zum Hinterleuchten der Anzeigefläche ist somit mindestens eine Art von Leuchte in die Anzeigevorrichtung integriert. Hierbei handelt es sich beispielsweise um eine oder mehrere LED. Diese wenigstens eine Lichtquelle kann beispielsweise blinken. Bei mehreren Lichtquellen können diese zudem oder alternativ nacheinander angesteuert werden, wodurch letztendlich verschiedene optische Lichteffekte erzeugt werden können. Zudem können verschiedene Farben der Lichtquellen gewählt werden, beispielsweise die besonders markante Warnfarbe Rot.

Durch die entsprechende Wahl der Lichtquelle wäre es beispielsweise möglich, dass nicht nur ein Warndreieck aufgrund eines Betätigens des Warnblinkers auf der Heckscheibe des Kraftfahrzeugs angezeigt wird, sondern mehrere Warndreiecke, die sich beispielsweise aus der Perspektive eines Betrachters des Kraftfahrzeugs betrachtet von links nach rechts über die Heckscheibe bewegen, zusätzlich in vorgegebenen Zeitintervallen aufblinken und dadurch besonders vorteilhaft Personen in einem hinter dem Kraftfahrzeug fahrenden anderen Fahrzeug warnen und über ein mögliches Gefahrenrisiko, aufgrund dessen die Betätigung des Warnblinkers durch den Benutzer des voranfahrenden Kraftfahrzeugs erfolgte, informieren.

Erfindungsgemäß ist es außerdem vorgesehen, dass die Lichtquelle eine Bremsleuchte ist, die derart in dem Fahrzeuganbauteil angeordnet ist, dass in der bestimmungsgemäßen Anbaulage durch die Bremsleuchte abgestrahltes Licht aus der vorgegebenen Betrachtungsposition sichtbar ist und Licht der Bremsleuchte mittels eines Lichtleiters zur Anzeigefläche geleitet wird und diese hinterleuchtet. Bei der Anzeigevorrichtung kann es sich somit um eine Kombination aus einer Bremsleuchte und einer Anzeigeeinrichtung handeln. Die Bremsleuchte selbst ist dabei derart in dem Fahrzeuganbauteil positioniert, dass diese Bremsleuchte aus der bestimmten Blickrichtung, das heißt beispielsweise für die Personen im einem sich hinter dem Kraftfahrzeug befindenden anderen Fahrzeug, direkt zu sehen ist. Ein Teil des von der Bremsleuchte im Falle ihrer Betätigung abgestrahlten Lichts wird jedoch durch ein entsprechendes optisches Element zur Anzeigefläche geleitet, sodass diese mit diesem Bremslicht hinterleuchtet wird und ein gewünschtes Abbild auf die Außenseite der entsprechenden Fahrzeugscheibe des Kraftfahrzeugs projiziert.

Alternativ dazu umfasst die Anzeigeeinrichtung sowohl die Lichtquelle als auch die Bremsleuchte, wobei die Bremsleuchte einer Erzeugung eines Bremslichtstrahls dient, wohingegen von der Lichtquelle aus, jedoch mithilfe des Lichtleiters, die Anzeigefläche hinterleuchtbar ist. Die Bremsleuchte dient also weiterhin nur der Erzeugung eines Bremslichtstrahls, wohingegen weiterhin von der Lichtquelle aus, jedoch mithilfe eines Lichtleiters, die Anzeigefläche hinterleuchtet wird. Die Anzeigeeinrichtung und die Bremsleuchte sind somit beispielsweise beide in einem Gehäuse integriert. Jedoch verfügen diese weiterhin über zwei getrennte Quellen für ihre Beleuchtung und zwar die Lichtquelle und die Bremsleuchte.

Hierdurch ist es beispielsweise möglich, dass bei einem Bremsen des Kraftfahrzeugs zusätzlich zu den aufleuchtenden Bremslichtern ein entsprechendes Warnsignal, wie beispielsweise ein Warndreieck, auf der Außenseite der Heckscheibe angezeigt wird. Bei den Bremsleuchten handelt es sich in diesem Fall um hochgesetzte Bremsleuchten, die sich oberhalb der Heckscheibe des Kraftfahrzeugs befinden. Hiermit ist es also möglich, dass Personen in einem sich hinter dem Kraftfahrzeug befindenden anderen Fahrzeug besonders vorteilhaft, denn besonders gut sichtbar, über ein Bremsen des sich vor ihnen befindenden Kraftfahrzeugs informiert beziehungsweise gewarnt werden. Insbesondere in einer Gefahrensituation, wie sie beispielsweise durch ein abruptes Bremsen des vorfahrenden Kraftfahrzeugs entstehen kann, ist ein solches zusätzliches optisches Warnsignal in direkter Blickhöhe des Fahrers des sich hinter dem Kraftfahrzeug befindenden anderen Fahrzeugs besonders sinnvoll.

In weiterer vorteilhafter Ausgestaltung der Erfindung ist es vorgesehen, dass in der bestimmungsgemäßen Anbauanlage die Abstrahlrichtung des reflektierten Lichts zumindest im Wesentlichen parallel zur Fahrzeuglängsrichtung ist. Die Anzeigevorrichtung wird also derart an der Karosserie des Kraftfahrzeugs angeordnet, dass das an der Fahrzeugscheibe zurückgebeugte Licht parallel zum Fahrzeuguntergrund ausgestrahlt wird. Dies ermöglicht, dass unabhängig von der Beschaffenheit des Fahrzeuguntergrunds beispielsweise Personen in einem sich hinter dem Kraftfahrzeug befindenden anderen Fahrzeugs oder Personen, die sich in der Umgebung hinter dem Kraftfahrzeug aufhalten, die Projektion des Abbilds der Anzeigeeinrichtung auf der Außenseite der Fahrzeugscheibe des Kraftfahrzeugs besonders vorteilhaft sehen können. Diese Personen sehen jedoch lediglich das reflektierte Licht und nicht die Lichtquelle selbst, was bewirkt, dass ein direktes Blenden dieser Person durch eine zu stark leuchtende direkte Lichtquelle verhindert wird. In der bestimmungsgemäßen Anbauanlage trifft durch die Anzeigefläche abgestrahltes Licht derart auf die Außenseite der Fahrzeugscheibe, wird durch die Fahrzeugscheibe transmittiert und an einer Innenseite der Fahrzeugscheibe reflektiert, dass ein zweites Abbild, versetzt zum an der Außenseite der Fahrzeugscheibe reflektierten Abbild, aus der vorgegebenen Betrachtungsposition sichtbar ist. Von der Fahrzeugscheibe, auf die das von der Anzeigefläche abgestrahlte Licht trifft, wird, je nach Transmissionsgrad der Scheibe, ein gewisser Anteil des Lichts transmittiert, das heißt durchgelassen. Dieses Licht wird daraufhin abhängig von der Materialbeschaffenheit der Fahrzeugscheibe zumindest teilweise an der Innenseite der Fahrzeugscheibe wieder zurückgebeugt. Hierdurch wird das Abbild der Anzeigefläche erneut für einen Betrachter aus der vorbestimmten Blickrichtung sichtbar. Es entsteht also ein zweites Abbild, das jedoch räumlich versetzt zum direkt an der Außenseite der Fahrzeugscheibe reflektierten Abbild sichtbar ist. Infolgedessen wird also eine zweite virtuelle Anzeigeebene des Abbilds erzeugt, die hinter einer virtuellen Anzeigeebene des an der Außenseite der Fahrzeugscheibe reflektierten Abbilds und der Fahrzeugscheibe angeordnet ist. Hierdurch wird ermöglicht, dass die Anzeige, das heißt das auf die Außenseite der Fahrzeugscheibe projizierte Abbild, auf zwei virtuellen Anzeigeebenen und somit dreidimensional erscheinend angezeigt wird. Dies verstärkt den warnenden Effekt einer derartigen Anzeige auf der Fahrzeugscheibe.

Wird beispielsweise ein Warndreieck mit der Anzeigevorrichtung auf die Außenseite der Fahrzeugscheibe des Kraftfahrzeugs projiziert, wird dieses Warndreieck dreidimensional erscheinend angezeigt und sticht dadurch einen Betrachter des Kraftfahrzeugs besonders aufmerksamkeitserweckend ins Auge, wodurch die warnende und informierende Funktion der Anzeigevorrichtung besonders vorteilhaft wird. Der dreidimensionale Effekt basiert hierbei letztendlich darauf, dass das von der Anzeigefläche abgestrahlte Licht sowohl zum Teil an der Grenzfläche von Luft zur Außenseite der Fahrzeugscheibe aber auch zu einem Teil an der Grenzfläche von der Fahrzeugscheibe zum Innenraum und somit der Grenzfläche zur sich im Kraftfahrzeug befindenden Luft zurückgebeugt wird.

In weiterer vorteilhafter Ausgestaltung der Erfindung ist es vorgesehen, dass die Anzeigefläche eine transparente Scheibe aufweist, welche mittels einer das Abbild bestimmenden Bildmaske maskiert ist. Auf der Anzeigefläche befindet sich somit eine Art Maske, in der mit Spiegelschrift beziehungsweise als gespiegeltes Symbol das Abbild vorgegeben ist, dass letztendlich bei einem Hinterleuchten der Anzeigefläche auf die Außenseite der Fahrzeugscheibe des Kraftfahrzeugs projiziert wird. Mithilfe der Maske kann beispielsweise das Warndreiecksymbol, ein Schriftzug wie "Bitte Fernlicht ausschalten" oder ein anderer Schriftzug beziehungsweise ein anderes Symbol als Abbild vorgegeben werden. Dies ermöglicht, dass mit besonders einfachen technischen Mitteln eine Anzeigevorrichtung zum Projizieren eines mithilfe der Maske vorgegebenen Abbilds auf der Außenseite der Fahrzeugscheibe des Kraftfahrzeugs realisiert werden kann.

In weiterer vorteilhafter Ausgestaltung der Erfindung ist es vorgesehen, dass die Anzeigefläche weitere, mittels einer jeweilige Abbilder bestimmenden Bildmaske maskierte transparente Scheiben aufweist, die mittels eines Austauschmechanismus derart positionierbar sind, dass durch die Anzeigefläche hindurchtretendes Licht derart auf die Außenseite der Fahrzeugscheibe trifft und von dieser reflektiert wird, dass das jeweilige Abbild aus der vorgegebenen Betrachtungsposition sichtbar ist. Es können also verschiedene Abbilder vorgesehen sein, zwischen denen gewechselt werden kann. Mit einem dafür vorgesehenen Mechanismus können diese einzelnen Abbilder mittels entsprechender Masken derart als Anzeigefläche positioniert werden, dass das die Anzeigefläche hinterleuchtende Licht durch diese Masken derart beeinflusst wird, dass das entsprechende gewünschte Abbild auf die Außenseite der Fahrzeugscheibe des Kraftfahrzeugs projiziert wird. Das auf diese Art und Weise projizierte Abbild wird derart von der Außenseite der Fahrzeugscheibe des Kraftfahrzeugs reflektiert, dass das Abbild aus der vorbestimmten Blickrichtung, das heißt beispielsweise für Personen in einem sich hinter dem Kraftfahrzeug befindenden anderen Fahrzeug oder Personen, die sich in der Umgebung hinter dem Kraftfahrzeug aufhalten, zu sehen ist.

Die Auswahl zwischen diesen einzelnen transparenten Scheiben und somit zwischen den verschiedenen gewünschten Abbildern kann manuell oder automatisch erfolgen. Bei einer manuellen Auswahl wäre das Abbild, das von der Anzeigevorrichtung angezeigt werden kann, für zumindest eine Fahrt des Kraftfahrzeugs festgelegt. Bei einer automatischen Austauschmöglichkeit der transparenten Scheiben und somit der Abbilder ist eine entsprechende Auswahl des Abbilds über eine Taste oder einen anderen Knopf im Fahrzeuginneren möglich. Es wäre zum Beispiel denkbar, dass zwei verschiedene maskierte transparente Scheiben in der Anzeigevorrichtung vorgesehen sind. Die eine dieser transparenten Scheiben weist ein Warndreieck auf und die andere die Botschaft "Bitte Fernlicht ausschalten." Sobald der Benutzer des Kraftfahrzeugs die Warnblinker im Kraftfahrzeug betätigt, würde die Maske mit dem Warndreieck vor der Anzeigefläche positioniert werden, damit dieses Warndreieck auf die Außenseite der Fahrzeugscheibe projiziert wird. Über einen entsprechenden Knopf im Fahrzeuginneren wäre es jedoch auch möglich für den Fahrer, die zweite Maske mit dem Schriftzug "Bitte Fernlicht ausschalten" auszuwählen, um in einer entsprechenden Situation einem Fahrer eines hinter dem Kraftfahrzeug fahrenden anderen Fahrzeugs zu bitten, beziehungsweise ihn daran zu erinnern, dass dieser sein Fernlicht ausschaltet. Mit der Anzeigevorrichtung können somit verschiedene und situationsbezogene Informationen und Warnungen für andere Verkehrsteilnehmer bereitgestellt werden.

In weiterer vorteilhafter Ausgestaltung der Erfindung ist es vorgesehen, dass die Anzeigefläche einen Bildschirm aufweist. Bei der Anzeigefläche kann es sich somit um eine elektrisch angesteuerte Anzeige ohne bewegliche Teile zur optischen Signalisierung von veränderlichen Informationen wie Bildern oder Zeichen handeln. Damit die auf diesem Bildschirm angezeigten Informationen besonders gut aus der vorgegebenen Betrachtungsposition sichtbar sind, kann der Bildschirm zudem von der zumindest einen Lichtquelle hinterleuchtet sein. Dann wäre es insbesondere möglich, dass bei Tageslicht und somit auch dann, wenn es außerhalb des Kraftfahrzeugs besonders hell ist, das auf die Außenseite der Fahrzeugscheibe des Kraftfahrzeugs projizierte Abbild besonders gut sichtbar ist. Die mithilfe des Bildschirms anzeigbaren Abbilder können entweder vorgegeben sein oder beliebig, beispielsweise mithilfe einer entsprechenden Mobiltelefon-App, gesteuert oder designt werden. Im Falle von vorgegebenen Abbildern können diese ebenfalls durch entsprechende Tasten und Knöpfe im Fahrzeuginneren oder durch entsprechende Steuerung der Mobiltelefon-App ausgewählt werden. Dies ermöglicht eine große potenzielle Anzahl an Abbildern, die auf der Außenseite der Fahrzeugscheibe für andere Verkehrsteilnehmer angezeigt werden können. Dies ermöglicht zudem, dass auf unterschiedliche regionale Gegebenheiten, wie beispielsweise Landessprachen oder besondere Verkehrsregeln, im Rahmen einer entsprechenden Anzeige durch die Anzeigevorrichtung eingegangen werden kann.

In einer weiteren vorteilhaften Ausgestaltung der Erfindung ist es vorgesehen, dass das Fahrzeuganbauteil ein Dachspoiler für einen Heckbereich des Kraftfahrzeugs ist. Bei dem außen an der Karosserie angeordneten Bauteil handelte es sich somit um einen vorstehenden Teil, der oberhalb der Heckscheibe angeordnet ist. Mit einer entsprechenden Anzeige im oberen Bereich des Heckfensters des Kraftfahrzeugs ist somit eine besonders vorteilhafte Position zum Warnen und Informieren von Personen in hinter dem Kraftfahrzeug fahrenden Kraftfahrzeugen möglich.

Erfindungsgemäß ist zudem ein Kraftfahrzeug mit einer Anzeigevorrichtung mit den oben genannten Merkmalen vorgesehen. Dieses Kraftfahrzeug weist somit ein Fahrzeuganbauteil auf, in dem eine Anzeigeeinrichtung angeordnet ist. Mit der Anzeigevorrichtung des Kraftfahrzeugs kann letztendlich auf einer Außenseite einer Fahrzeugscheibe des Kraftfahrzeugs ein Abbild projiziert werden, dass aus einer vorgegebenen Betrachtungsposition sichtbar ist. Aus der vorgegebenen Betrachtungsposition kann die Anzeigeeinrichtung mit einer hinterleuchtbaren Anzeigefläche, die letztendlich das Abbild auf die Außenseite der Fahrzeugscheibe des Kraftfahrzeugs projiziert, jedoch nicht eingesehen werden. Das Kraftfahrzeug weist somit eine besonders vorteilhafte Anzeigevorrichtung zum Anzeigen von Warnungen und Informationen für andere Verkehrsteilnehmer, wie beispielsweise Personen in einem sich hinter dem Kraftfahrzeug befindenden anderen Fahrzeug, auf.

Alternativ ist es bei einer entsprechenden Anordnung des Fahrzeuganbauteils mit der Anzeigeeinrichtung relativ zur Fahrzeugscheibe, auf die das Abbild projiziert werden soll, möglich, eine Spiegelung des Abbilds an der Innenseite der Fahrzeugscheibe zu erreichen. Dies ist möglich, falls das von der Anzeigefläche durch deren Hinterleuchtung ausgehende Licht mit einem vorbestimmten Winkel auf die Fahrzeugscheibe trifft und gebrochen wird, dass der Winkel, mit dem der durch die Fahrzeugscheibe transmittierte Lichtstrahl auf die Innenseite der Fahrzeugscheibe trifft, größer als ein vorbestimmter kritischer Winkel der Totalreflexion ist. Dieser Winkel ist abhängig von den Brechungsindizes des umgebenden Mediums, das heißt von Luft, und des Materials der verwendeten Fahrzeugscheibe. Falls die gewählte Anordnung des Fahrzeuganbauteils relativ zur Fahrzeugscheibe das Auftreten von Totalreflexion an der Innenseite der Fahrzeugscheibe ermöglicht, ist somit eine besonders hohe Intensität des reflektierten Lichts und somit letztendlich des projizierten Abbilds auf der Fahrzeugscheibe möglich.

Die Erfindung umfasst auch die Kombinationen der beschriebenen Ausführungsformen.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: eine schematische Darstellung eines Heckbereichs eines Kraftfahrzeugs mit einer in einen Dachspoiler integrierten Anzeigevorrichtung;
- Fig. 2: eine schematische Darstellung einer Anzeigevorrichtung in einem Fahrzeuganbauteil eines Kraftfahrzeugs mit einer separaten Bremsleuchte;
- Fig.3: eine schematische Darstellung einer Anzeigevorrichtung in einem Fahrzeuganbauteil eines Kraftfahrzeugs mit einer integrierten Bremsleuchte und zwei Lichtquellen;
- Fig. 4: eine schematische Darstellung einer Anzeigevorrichtung in einem Fahrzeuganbauteil eines Kraftfahrzeugs mit einer integrierten Bremsleuchte und einer Lichtquelle.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

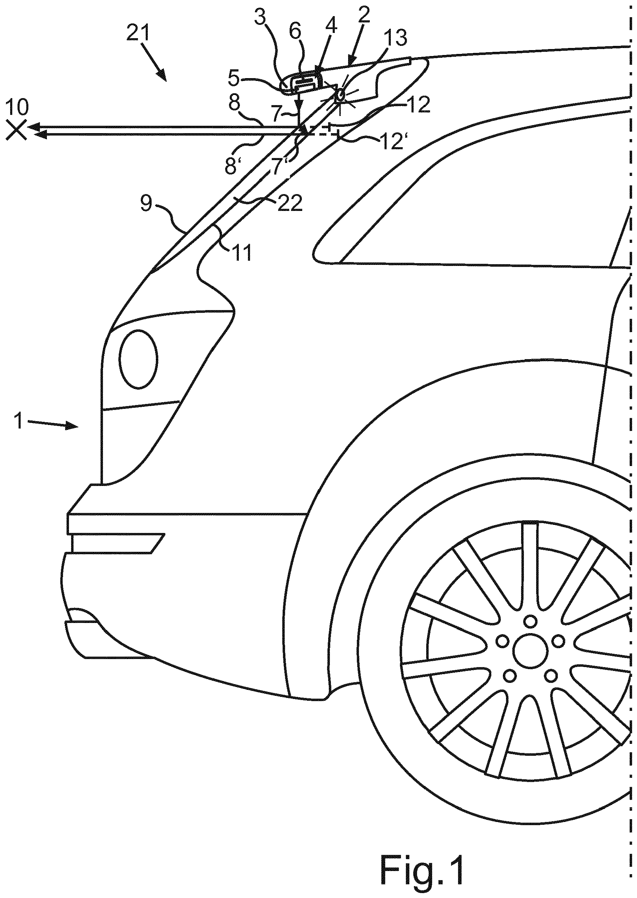

In Fig. 1 ist der Heckbereich 21 eines Kraftfahrzeugs 1 skizziert. Dieses Kraftfahrzeug 1 weist eine Anzeigevorrichtung 2 auf, die einen Dachspoiler 3 umfasst. In diesen Dachspoiler 3 ist eine Anzeigeeinrichtung 4 integriert, die eine Anzeigefläche 5 sowie eine Lichtquelle 6 aufweist. Die Anzeigefläche 5 wird von hinten von der Lichtquelle 6 beleuchtet, also hinterleuchtet, und infolgedessen wird ein Abbild der Anzeigefläche 5 auf die Außenseite 9 der Fahrzeugscheibe 22 des Kraftfahrzeugs 1 projiziert. Dieses Abbild kann beispielsweise ein Warndreieck oder einen Schriftzug "Bitte Fernlicht ausschalten" darstellen.

Die Anzeigeeinrichtung 4 mit der Anzeigefläche 5 ist von einer vorgegebenen Betrachtungsposition 10 aus nicht sichtbar und durch entsprechende Komponenten des Dachspoilers 3 verdeckt. Diese Betrachtungsposition 10 entspricht beispielsweise der Position von Personen in einem hinter dem Kraftfahrzeug 1 fahrenden weiteren Kraftfahrzeug 1 oder der Betrachtungsposition 10 von sich in der Umgebung des Kraftfahrzeugs 1 befindenden Personen.

Von der Betrachtungsposition 10 aus ist jedoch die Reflexion des auf die Außenseite 9 der Fahrzeugscheibe 22 des Kraftfahrzeugs 1 projizierten Abbilds sichtbar. In der Fig. 1 ist der von der Lichtquelle 6 ausgehende und die Anzeigefläche 5 hinterleuchtende Lichtstrahl 7 als Pfeil eingezeichnet. Zudem ist die Abstrahlrichtung 8 des an der Außenseite 9 der Fahrzeugscheibe 22 des Kraftfahrzeugs 1 reflektierten Lichts eingezeichnet. Die Abstrahlrichtung 8 verläuft in der bestimmungsgemäßen Anbaulage des Dachspoilers 3 parallel zur Fahrzeuglängsrichtung in Richtung der Betrachtungsposition 10.

Durch die Reflexion des Lichtstrahls 7 an der Außenseite 9 der Fahrzeugscheibe 22 wird für einen Betrachter an der Betrachtungsposition 10 eine virtuelle Abbildung der Anzeigefläche 5 auf einer virtuellen Anzeigeebene 12 erzeugt. Zudem wird ein Teil des Lichtstrahls 7 nicht an der Außenfläche 9 der Fahrzeugscheibe 22 reflektiert sondern durch die Fahrzeugscheibe 22 transmittiert. Dieser transmittierte Lichtstrahl 7' wird allerdings zumindest teilweise an der Innenseite 11 der Fahrzeugscheibe 22 reflektiert und zwar in Abstrahlrichtung 8'. Hierdurch entsteht ein zweites Abbild der Anzeigefläche 5 und infolgedessen eine zweite virtuelle Anzeigeebene 12' hinter der virtuellen Anzeigeebene 12 und der Ebene der Fahrzeugscheibe 22. Dieses zweite Abbild ist leicht versetzt zu dem an der Außenseite 9 der Fahrzeugscheibe 22 reflektierten ersten Abbild. Wird beispielsweise ein Warndreieck mittels der Anzeigefläche 5 auf die Fahrzeugscheibe 22 projiziert, wird dieses Warndreieck durch die Reflektion an der Außenseite 9 sowie an der Innenseite 11 der Fahrzeugscheibe 22 für einen Betrachter dreidimensional erscheinend auf der Fahrzeugscheibe 22 dargestellt. Dieses dreidimensional erscheinende Warndreieck kann zum Beispiel dann auf die Fahrzeugscheibe 22 projiziert werden, wenn der Fahrer den Warnblinker im Kraftfahrzeug 1 auslöst, beispielsweise bei einer Stausituation oder einer anderen Gefahrensituation auf einer Schnellstraße.

Zudem kann die Anzeigeeinrichtung 4 das Projizieren eines Warndreiecks auf die Fahrzeugscheibe 22 mit der Aktivierung einer Bremsleuchte 13 und somit mit einem Bremsen des Kraftfahrzeugs 1 kombiniert sein. Beispielsweise wäre es möglich, dass immer dann mit der Anzeigevorrichtung 2 ein Warndreieck auf die Fahrzeugscheibe 22 projiziert wird, wenn die Bremsleuchte 13 aufgrund eines Bremsen des Kraftfahrzeugs 1 aktiviert wird.

Handelt es sich bei der Fahrzeugscheibe 22 um eine normal verglaste Fahrzeugscheibe 22 weist diese einen relativ hohen Transmissionsgrad von typischerweise über 90% auf, sodass nur typischerweise 4% der einfallenden Intensität in Abstrahlrichtung 8 reflektiert werden. An der Innenseite 11 der Fahrzeugscheibe 22 werden ebenfalls typischerweise 4% der Intensität des transmittierten Lichtstrahls 7' in Abstrahlrichtung 8' reflektiert. Handelt es sich bei der Fahrzeugscheibe 22 beispielsweise um eine Fahrzeugscheibe 22 mit Privacy-Verglasung mit einem Transmissionsgrad von typischerweise 75%, beträgt die Intensität des in Abstrahlrichtung 8 reflektierten Lichts ebenfalls typischerweise 4%. An der Innenseite 11 der Fahrzeugscheibe 22 aus Privacy-Verglasung werden jedoch nur typischerweise 0,3% der Intensität des transmittierten Lichtstrahls 7' in Abstrahlrichtung 8' reflektiert. Die gesamte Intensität des reflektierten Lichts wird somit bei einer Privacy-Verglasung um annähernd 50% verglichen mit einer normalen Verglasung reduziert. Wird also die Anzeigevorrichtung 2 in Kombination mit einer Fahrzeugscheibe 22 aus Privacy-Verglasung verwendet, ist eine höhere Lichtleistung der Lichtquelle 6 nötig, um die gleiche Leuchtintensität des auf der Fahrzeugscheibe 22 projizierten Abbilds zu erreichen.

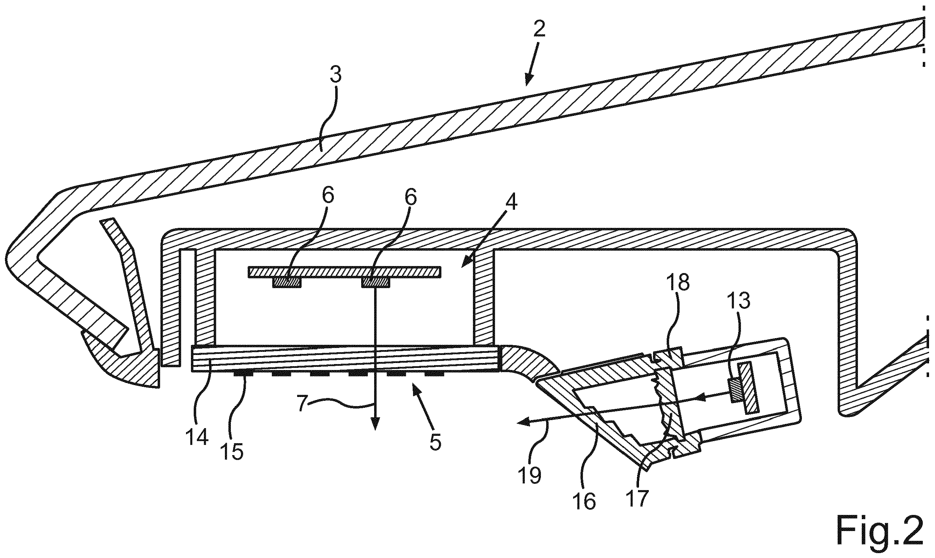

In Fig. 2 ist die Anzeigevorrichtung 2 mit integrierter Bremsleuchte 13 skizziert, wobei die Bremsleuchte 13 und die Lichtquelle 6 voneinander getrennt sind. Der Lichtstrahl 7 von der Lichtquelle 6, der auf die Anzeigefläche 5 trifft, beleuchtet eine transparente Scheibe 14, welche mittels einer das Abbild bestimmenden Bildmaske 15 maskiert ist. Mit Hilfe dieser Bildmaske 15 wird das auf der Fahrzeugscheibe 22 projizierte Abbild definiert, zum Beispiel indem es in Spiegelschrift oder als gespiegeltes Symbol auf der Bildmaske 15 dargestellt ist.

Es können beispielsweise mehrere solcher transparenten Scheiben 14 mit der Bildmaske 15 in der Anzeigeeinrichtung 4 vorhanden sein, die durch einen entsprechenden Austauschmechanismus einzeln, zum Beispiel ausgewählt durch eine entsprechende Taste im Fahrzeuginneren, als Anzeigefläche 5 vor der Lichtquelle 6 positioniert werden können. Alternativ ist es möglich, dass mehrere Lichtquellen 6 vorhanden sind, die getrennt voneinander angesteuert werden können, sodass letztendlich mithilfe einer entsprechenden Optik einzelne Bereiche einer Bildmaske 15 einzeln beleuchtet werden können, wodurch ebenfalls verschiedene Abbilder auf die Fahrzeugscheibe 22 projizierbar sind.

Mithilfe eines entsprechenden Austauschmechanismus der transparenten Scheiben 14 wäre es beispielsweise möglich, dass sobald ein Fahrer des Kraftfahrzeugs 1 den Warnblinker des Kraftfahrzeugs 1 betätigt, ein Warndreieck mittels einer entsprechenden Bildmaske 15 auf die Fahrzeugscheibe 22 projiziert wird. Drückt der Fahrer jedoch im Kraftfahrzeug 1 eine entsprechende Taste beziehungsweise einen entsprechenden Knopf, kann er auswählen, dass der Schriftzug "Bitte Fernlicht ausschalten" anstelle des potentiell dort projizierten Warndreiecks auf die Fahrzeugscheibe 22 projiziert wird, um damit den Fahrer eines sich hinter dem Kraftfahrzeug 1 bewegenden anderen Kraftfahrzeug 1 darauf hinzuweisen, das Fernlicht auszuschalten, da dieses beispielsweise den Fahrer des Kraftfahrzeugs 1 blendet.

Anstelle einer Anzeigefläche 5 mit zumindest einer transparenten Scheibe 14 mit einer Bildmaske 15, die von hinten von mindestens einer Lichtquelle 6 beleuchtet wird, wäre auch eine Anzeigefläche 5, die einen Bildschirm umfasst, möglich. Dieser Bildschirm, das heißt diese Anzeigefläche 5, würde ebenfalls von einer Lichtquelle 6 von hinten beleuchtet werden, um sicherzustellen, dass auch bei hellem Tageslicht das auf die Fahrzeugscheibe 22 projizierte Abbild von der Betrachtungsposition 10 aus gut sichtbar ist. Der auf diesem Bildschirm dargestellte Inhalt, das heißt das jeweilige auf die Fahrzeugscheibe 22 projizierte Abbild, kann entweder ebenfalls per Tastenkombination im Fahrzeuginneren ausgewählt werden, könnte jedoch auch von einem Benutzer individuell über eine entsprechende Mobiltelefon-App oder eine andere Schnittstelle gesteuert und designt werden.

Anstelle eines Austauschmechanismus für verschiedene transparente Scheiben 14 als Anzeigeflächen 5 wäre zudem auch ein manuelles Austauschen der transparenten Scheiben 14 möglich.

In Fig. 2 umfasst der Dachspoiler 3 und somit die Anzeigevorrichtung 2 zudem eine Bremsleuchte 13, die mithilfe einer Bremslichtoptik 17 durch eine Bremslichtscheibe 16 einen Bremslichtstrahl 19 emittiert, der von der Betrachtungsposition 10 aus ebenfalls sichtbar ist. Diese Komponenten, das heißt die Bremsleuchte 13, die Bremslichtoptik 17 und die Bremslichtscheibe 16 sind in ein Bremsleuchtgehäuse 18 integriert, das Bestandteil der Anzeigevorrichtung 2 ist. Die Bremsleuchte 13 und die Anzeigevorrichtung 2 sind somit voneinander entkoppelt.

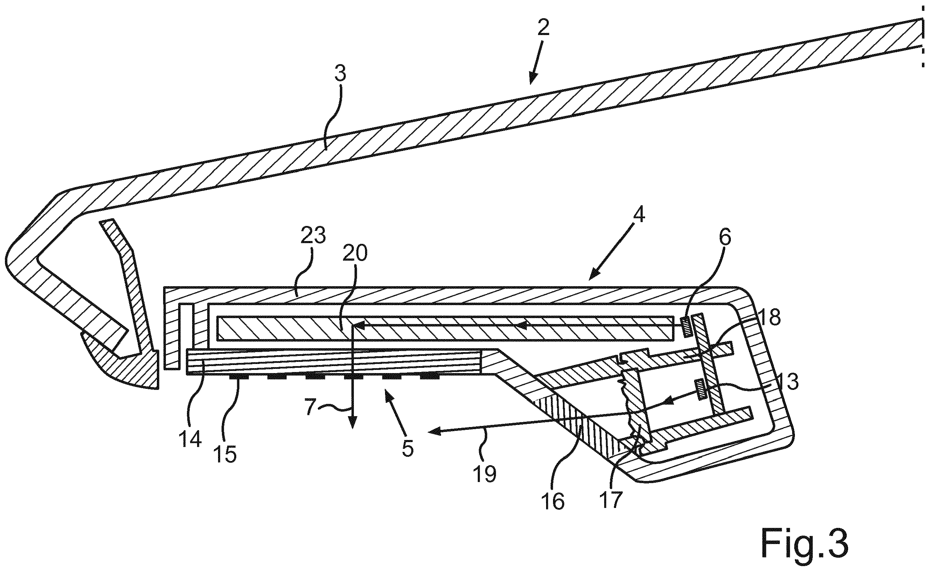

In Fig. 3 ist die Bremsleuchte 13 zusammen mit der Bremslichtoptik 17 und der Bremslichtscheibe 16 in die Anzeigeeinrichtung 4 integriert. Die Bremsleuchte 13 dient jedoch weiterhin nur der Erzeugung des Bremslichtstrahls 19, wohingegen weiterhin von der Lichtquelle 6 aus, jedoch mithilfe eines Lichtleiters 20, die Anzeigefläche 5 mit der transparenten Scheibe 14 und der Bildmaske 15 hinterleuchtet wird. Die Anzeigeeinrichtung 4 und die Bremsleuchte 13 sind somit beide in einem Gehäuse 23 integriert. Jedoch verfügen diese weiterhin über zwei getrennte Quellen für ihre Beleuchtung und zwar die Lichtquelle 6 und die Bremsleuchte 13.

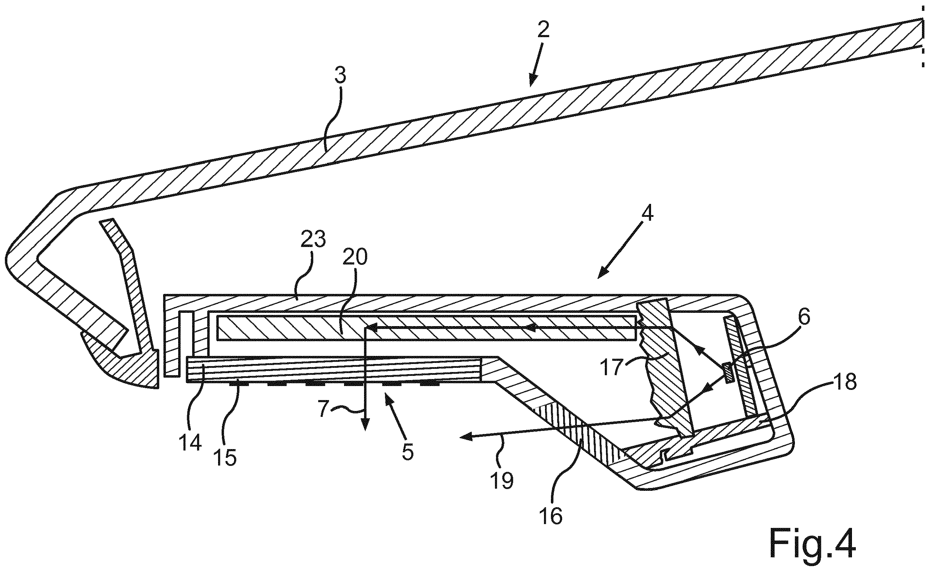

In Fig. 4 ist ebenfalls eine in ein Gehäuse 23 integrierte Anzeigeeinrichtung 4 mit einer Bremsleuchte 13 skizziert. Allerdings werden hier die Anzeigefläche 5 und die Bremslichtoptik 17 mit der Bremslichtscheibe 16 von einer einzelnen Lichtquelle 6 beleuchtet. Bei dieser Form der Anzeigevorrichtung 2 wird also immer dann ein entsprechend gewähltes Abbild mithilfe der Anzeigeeinrichtung 4 auf die Fahrzeugscheibe 22 projiziert, wenn die Bremsleuchte 13, hier beleuchtet durch die Lichtquelle 6, aktiviert wird. Eine von einem Bremsen des Kraftfahrzeugs 1 unabhängige Ansteuerung der Anzeigeeinrichtung 4 ist somit mit dieser in Fig. 4 skizierten Anzeigevorrichtung 2 nicht möglich.

Je nachdem welche Lichtquelle 6 verwendet wird, beziehungsweise je nachdem wie diese Lichtquelle 6 gesteuert wird, kann zudem erreicht werden, dass das auf der Fahrzeugscheibe 22 projizierte Abbild verschiedene optische Effekte wiedergibt, zum Beispiel blinkend dargestellt wird oder sich entlang der Breite des Dachspoilers 3 von einer Seite zur anderen bewegt.

Insgesamt zeigen die Beispiele, dass mit der Anzeigevorrichtung 2, die einen Dachspoiler 3 umfasst, in dem eine Anzeigeeinrichtung 4 angeordnet ist, dadurch dass die Anzeigeeinrichtung 4 eine hinterleuchtbare Anzeigefläche 5 aufweist, ein Abbild auf eine Außenseite 9 einer Fahrzeugscheibe 22 des Kraftfahrzeugs 1 projiziert werden kann, dass von der Betrachtungsposition 10 aus sichtbar ist, wobei die Anzeigefläche 5 selbst von der Betrachtungsposition 10 aus verdeckt ist.

## Patentansprüche

1. Anzeigevorrichtung (2) für ein Kraftfahrzeug (1), umfassend ein Fahrzeuganbauteil , in welchem eine Anzeigeeinrichtung (4) angeordnet ist, wobei
- die Anzeigeeinrichtung (4) eine hinterleuchtbare Anzeigefläche (5) zum Projizieren eines Abbilds auf eine Außenseite (9) einer Fahrzeugscheibe (22) des Kraftfahrzeugs (1) aufweist, und die Anzeigevorrichtung (2) zumindest eine Lichtquelle (6), mit der die Anzeigefläche (5) hinterleuchtbar ist, umfasst;
- das Fahrzeuganbauteil in seiner bestimmungsgemäßen Anbaulage die Anzeigefläche (5) zumindest aus einer vorgegebenen Betrachtungsposition (10), welche außerhalb des Kraftfahrzeugs (1) ist, verdeckt; **dadurch gekennzeichnet, dass**
- in der bestimmungsgemäßen Anbaulage durch die Anzeigefläche (5) hindurchtretendes Licht derart auf die Außenseite (9) der Fahrzeugscheibe (22) trifft und von dieser reflektiert wird, dass das Abbild aus der vorgegebenen Betrachtungsposition (10) sichtbar ist;
- die Lichtquelle (6) eine Bremsleuchte (13) ist, die derart in dem Fahrzeuganbauteil angeordnet ist, dass in der bestimmungsgemäßen Anbaulage durch die Bremsleuchte (13) abgestrahltes Licht aus der vorgegebenen Betrachtungsposition (10) sichtbar ist und Licht der Bremsleuchte (13) mittels eines Lichtleiters (20) zur Anzeigefläche (5) geleitet wird und diese hinterleuchtet, oder die Anzeigeeinrichtung (4) sowohl die Lichtquelle (6) als auch die Bremsleuchte (13) umfasst, wobei die Bremsleuchte (13) einer Erzeugung eines Bremslichtstrahls (19) dient, wohingegen von der Lichtquelle (6) aus, jedoch mithilfe des Lichtleiters (20), die Anzeigefläche (5) hinterleuchtbar ist.

2. Anzeigevorrichtung (2) nach Anspruch 1,
**dadurch gekennzeichnet, dass**
in der bestimmungsgemäßen Anbaulage die Abstrahlrichtung des reflektierten Lichts zumindest im Wesentlichen parallel zur Fahrzeuglängsrichtung ist.

3. Anzeigevorrichtung (2) nach einem der vorhergehenden Ansprüche,
**dadurch gekennzeichnet, dass**
die Anzeigefläche (5) eine transparente Scheibe (14) aufweist, welche mittels einer das Abbild bestimmenden Bildmaske (15) maskiert ist.

4. Anzeigevorrichtung (2) nach Anspruch 3,
**dadurch gekennzeichnet, dass**
die Anzeigefläche (5) weitere, mittels einer jeweilige Abbilder bestimmenden Bildmaske (15) maskierte transparente Scheiben (14) aufweist, die mittels eines Austauschmechanismus derart positionierbar sind, dass durch die Anzeigefläche (5) hindurchtretendes Licht derart auf die Außenseite (9) der Fahrzeugscheibe (22) trifft und von dieser reflektiert wird, dass das jeweilige Abbild aus der vorgegebenen Betrachtungsposition (10) sichtbar ist.

5. Anzeigevorrichtung (2) nach einem der vorhergehenden Ansprüche,
**dadurch gekennzeichnet, dass**
die Anzeigefläche (5) einen Bildschirm aufweist.

6. Anzeigevorrichtung (2) nach einem der vorhergehenden Ansprüche,
**dadurch gekennzeichnet, dass**
das Fahrzeuganbauteil ein Dachspoiler (3) für einen Heckbereich (21) des Kraftfahrzeugs (1) ist.

7. Kraftfahrzeug (1) mit einer Anzeigevorrichtung (2) nach einem der vorhergehenden Ansprüche.

## Claims

1. Display device (2) for a motor vehicle (1), comprising a vehicle attachment, in which a display apparatus (4) is arranged, wherein
- the display apparatus (4) has a back-lit display area (5) for projecting an image on an outside (9) of a vehicle window (22) of the motor vehicle (1), and the display device (2) comprises at least one light source (6), with which the display area (5) is back-lit,
- in its intended mounting position, the vehicle conceals the display area (5) at least from a specified viewing position (10), which is outside the motor vehicle (1), **characterised in that**
- in the intended mounting position, light passing through the display area (5) strikes the outside (9) of the vehicle window (22) and is reflected by the latter such that the image is visible from the specified viewing position (10),
- the light source (6) is a brake light (13), which is arranged in the vehicle attachment such that, in the intended mounting position, light emitted by the brake light (13) is visible from the specified viewing position (10) and light from the brake light (13) is carried to the display area (5) by means of a light conductor (20) and backlights the latter, or the display apparatus (4) comprises both the light source (6) and the brake light (13), wherein the brake light (13) is used to generate a brake light beam (19), whereas the display area (5) can be back-lit by the light source (6), but with the aid of the light conductor (20).

2. Display device (2) according to claim 1, **characterised in that**, in the intended mounting position, the beam direction of the reflected light is at least substantially parallel to the vehicle longitudinal direction.

3. Display device (2) according to any of the preceding claims, **characterised in that** the display area (5) has a transparent panel (14), which is masked by means of an image mask (15) defining the image.

4. Display device (2) according to claim 3, **characterised in that** the display area (5) has further transparent panels (14), masked by means of an image mask (15) defining respective images, which can be positioned by means of an exchange mechanism such that light passing through the display area (5) strikes the outside (9) of the vehicle window (22) and is reflected by the latter such that the respective image is visible from the specified viewing position (10).

5. Display device (2) according to any of the preceding claims, **characterised in that** the display area (5) has a screen.

6. Display device (2) according to any of the preceding claims, **characterised in that** the vehicle attachment is a roof spoiler (3) for a rear region (21) of the motor vehicle (1).

7. Motor vehicle (1) with a display device (2) according to any of the preceding claims.

## Revendications

1. Dispositif d'affichage (2) pour un véhicule automobile (1) comprenant une pièce rapportée de véhicule, dans laquelle un dispositif d'affichage (4) est agencé, dans lequel
- le dispositif d'affichage (4) présente une surface d'affichage (5) rétroéclairable pour la projection d'une image sur un côté extérieur (9) d'une vitre de véhicule (22) du véhicule automobile (1), et le dispositif d'affichage (2) comporte au moins une source de lumière (6) avec laquelle la surface d'affichage (5) est rétroéclairable ;
- la pièce rapportée de véhicule masque dans sa position rapportée selon les dispositions la surface d'affichage (5) au moins d'une position d'observation (10) prédéfinie qui est en dehors du véhicule automobile (1) ; **caractérisé en ce que**
- dans la position rapportée selon les dispositions de la lumière passant à travers la surface d'affichage (5) frappe le côté extérieur (9) de la vitre de véhicule (22) et est réfléchie par celui-ci de telle manière que l'image soit visible depuis la position d'observation (10) prédéfinie ;
- la source de lumière (6) est une lampe de freinage (13) qui est agencée dans la pièce rapportée de véhicule de telle manière que dans la position rapportée selon les dispositions de la lumière émise par la lampe de freinage (13) soit visible depuis la position d'observation (10) prédéfinie et de la lumière de la lampe de freinage (13) soit conduite au moyen d'un conducteur de lumière (20) à la surface d'affichage (5) et rétroéclaire celle-ci, ou le dispositif d'affichage (4) comporte non seulement la source de lumière (6) mais aussi la lampe de freinage (13), dans lequel la lampe de freinage (13) sert à une génération d'un faisceau de lumière de freinage (19), alors que depuis la source de lumière (6), toutefois à l'aide du conducteur de lumière (20), la surface d'affichage (5) est rétroéclairable.

2. Dispositif d'affichage (2) selon la revendication 1,
**caractérisé en ce que**
dans la position rapportée selon les dispositions le sens de rayonnement de la lumière réfléchie est au moins sensiblement parallèle au sens longitudinal du véhicule.

3. Dispositif d'affichage (2) selon l'une des revendications précédentes,
**caractérisé en ce que**
la surface d'affichage (5) présente une vitre transparente (14) qui est masquée au moyen d'un masque d'image (15) déterminant l'image.

4. Dispositif d'affichage (2) selon la revendication 3,
**caractérisé en ce que**
la surface d'affichage (5) présente d'autres vitres (14) transparentes masquées au moyen d'un masque d'image (15) déterminant des images respectives qui peuvent être positionnées au moyen d'un mécanisme d'échange de telle manière que de la lumière passant à travers la surface d'affichage (5) frappe le côté extérieur (9) de la vitre de véhicule (22) et soit réfléchie par celui-ci de telle manière que l'image respective soit visible depuis la position d'observation (10) prédéfinie.

5. Dispositif d'affichage (2) selon l'une des revendications précédentes,
**caractérisé en ce que**
la surface d'affichage (5) présente un écran.

6. Dispositif d'affichage (2) selon l'une des revendications précédentes,
**caractérisé en ce que**
la pièce rapportée de véhicule est un becquet de toit (3) pour une zone arrière (21) du véhicule automobile (1).

7. Véhicule automobile (1) avec un dispositif d'affichage (2) selon l'une des revendications précédentes.
